# EUROPEAN PATENT SPECIFICATION

(11) **EP 3 246 216 B1**
(45) Date of publication and mention of the grant of the patent: **15.05.2019**
(21) Application number: 15877918.1
(22) Date of filing: 16.10.2015
(51) Int. Cl.: B60R 22/44, B60R 22/48, B60R 22/46

(54) **SEATBELT TAKE-UP DEVICE AND SEATBELT SYSTEM**
SITZGURTAUFNAHMEVORRICHTUNG UND SITZGURTVORRICHTUNG
DISPOSITIF D'ENROULEMENT DE CEINTURE DE SÉCURITÉ ET SYSTÈME DE CEINTURE DE SÉCURITÉ

(30) Priority: 14.01.2015 JP 2015004791
(43) Date of publication of application: 22.11.2017
(73) Proprietor: Joyson Safety Systems Japan K.K., Shinagawa-ku Tokyo (JP)
(72) Inventor: TOMBE, Hideyuki, Shiga 5291388 (JP)
(74) Representative: Banzer, Hans-Jörg
(86) International application number: PCT/JP2015/079296
(87) International publication number: WO 2016/113966

(56) References cited:
- JP-A- 2005 035 485
- JP-A- 2013 082 325
- US-A1- 2013 049 340

## Description

### [Technical Field]

The present invention relates to seatbelt winding apparatuses and seatbelt apparatuses.

### [Background Art]

There is a seatbelt apparatus known in the art, which, in response to acceleration of a preset value or more imposing on a vehicle, controls driving current applied to a motor so as to wind up a preset length of a seatbelt (or a webbing) and then controls the driving current applied to the motor in accordance with pull-out of the seatbelt caused by shift of the upper body of a passenger (for example, see Japanese Unexamined Patent Application Publication No. 2011-25764).

### [Summary of Invention]

### [Technical Problem]

Such a seatbelt apparatus as described above removes slack of a seatbelt and then, in response to the seatbelt being pulled out due to swing of the upper body of a passenger, drives a motor to retract the seatbelt against being pulled out, such that the seatbelt is controlled against being pulled out.

However, such a seatbelt apparatus as disclosed in Japanese Unexamined Patent Application Publication No. 2011-25764 detects pull-out of a seatbelt by use of a sensor and then increases an amount of current conducting in the motor to retract the seatbelt against being pulled out as detected by the sensor, such that the seatbelt is controlled against being pulled out. Therefore, such a seatbelt apparatus as disclosed in Japanese Unexamined Patent Application Publication No. 2011-25764 cannot restrain a seatbelt from being pulled out, without a sensor to detect pull-out of the seatbelt.

A seatbelt winding apparatus according to the preamble of claim 1 is known from JP 2005-035485 A.

An object of the present invention is to provide a seatbelt winding apparatus and a seatbelt apparatus for controlling a seatbelt against being pulled out, even without a sensor to detect pull-out of the seatbelt.

### [Solution to Problem]

According to the invention, a seatbelt winding apparatus as defined in claim 1 is provided. The dependent claims define preferred and/or advantageous embodiments of the invention.

The present invention provides a seatbelt winding apparatus and a seatbelt apparatus including: a motor; and a control device configured to decrease electric power provided to the motor from a first value that is required to wind up a seatbelt at posture-support starting to a second value that is smaller than the first value. After decreasing the electric power from the first value to the second value, the control device increases the electric power at an increase rate that defines an
amount of increase in the electric power per unit time, in order to restrain the seatbelt from being pulled out.

### [Advantageous Effects of Invention]

According to an embodiment of the present invention, a seatbelt can be controlled against being pulled out even without a sensor to detect pull-out of the seatbelt.

### [Brief Description of Drawings]

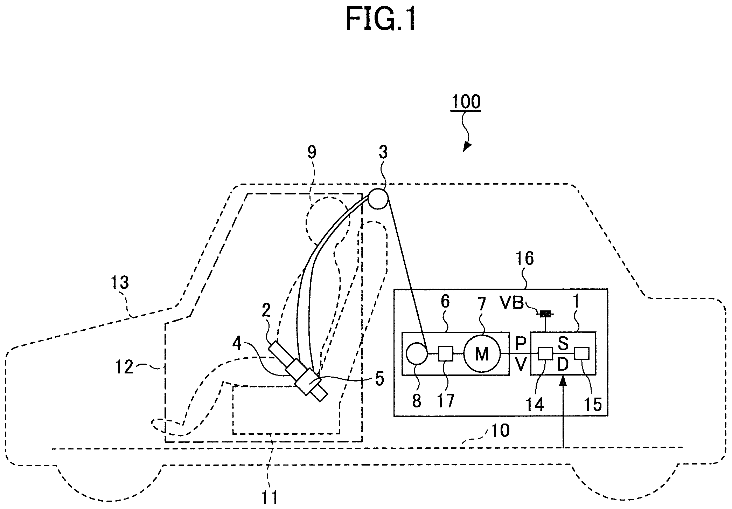

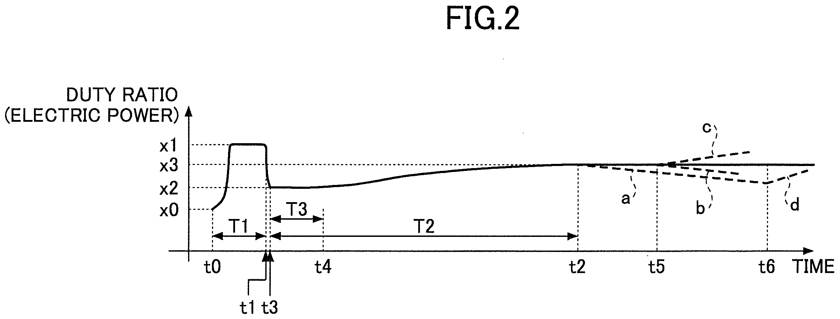

[FIG. 1] FIG. 1 is a configuration diagram illustrating an example of a seatbelt apparatus; and [FIG. 2] FIG. 2 is a drawing illustrating an example as to how a duty ratio (or electric power to be provided to a motor) of a pulse width modulation signal for controlling a driving voltage of a motor shifts over time.

### [Description of Embodiments]

The following description explains an embodiment of the present invention along with drawings.

FIG. 1 is a configuration diagram schematically illustrating an example of a seatbelt apparatus 100. The seatbelt apparatus 100 is mounted on a vehicle 13 such as a car. The seatbelt apparatus 100 includes, for example, a seatbelt 2, a seatbelt winding apparatus 16, a shoulder anchor 3, a tongue 4, and a buckle 5. The seatbelt winding apparatus 16 includes a retractor 6 and a control device 1. The vehicle 13 is provided with an openable and closable door 12. For example, the door 12 is for a passenger 9 to get on and off the vehicle 13.

The seatbelt 2 is an example of a belt-shaped member for restraining the passenger 9 sitting on a seat 11 of the vehicle 13; the seatbelt 2 is wound up by the retractor 6 and can be pulled out from the retractor 6. An end of the seatbelt 2 is connected to the retractor 6, and the other end of the seatbelt 2 is fixed to the car body, a pretensioner device, the seat 11, etc. Seatbelts are also called webbings.

The retractor 6 is an example of a winding device for enabling winding up and pulling out the seatbelt 2. The retractor 6 is fixed, for example, to the car body in a close distance from the seat 11.

The retractor 6 includes, for example, a belt-reel 8, a motor 7 for winding up the seatbelt 2 using the belt-reel 8, and a clutch 17 for activating and deactivating a pathway for the transmitting driving force between the motor 7 and the belt-reel 8 .

The shoulder anchor 3 is an example of a guide member for guiding the seatbelt 2 pulled out from the retractor 6 towards a shoulder of a passenger.

The tongue 4 is an example of a member attached slidably on the seatbelt 2, which is guided by the shoulder anchor 3.

The buckle 5 is an example of a member to which the tongue 4 is attachable and detachable. The buckle 5 is fixed, for example, to the floor of the car body or to the seat 11.

When the seatbelt 2 is not fastened for a passenger, i.e., in an unfastened state, the tongue 4 is not engaged with the buckle 5 and the entire length of the seatbelt 2 (specifically, the length of the seatbelt 2 that can be naturally wound up by the retractor 6) is wound up by the retractor 6. Contrarily, when the seatbelt 2 is fastened for a passenger, i.e., in a fastened state, the seatbelt 2 is pulled out from the retractor 6, as illustrated in FIG. 1. Further, in the fastened state, the tongue 4 is engaged with the buckle 5, and the seatbelt 2 is wound up by the retractor 6 to reduce slack of the seatbelt 2, such that the seatbelt 2 is fastened for the passenger.

The control device 1 is an example of a device for controlling magnitude of driving power P to be provided to the motor 7 of the retractor 6 so as to adjust the force of the motor 7 to wind up the seatbelt 2 using the belt-reel 8. For example, the control device 1 may be an electric control unit (what is called an engine control unit (ECU)) for controlling a seatbelt, etc. In the present embodiment, the control device 1 includes, for example, a drive-circuit 14 and a control-circuit 15.

The drive-circuit 14 is an example of a driving unit for supplying driving power P to the motor 7 to drive the motor 7 with a voltage (i.e., a driving voltage V) of the driving power P. The driving voltage V is a voltage applied to the motor 7. The drive-circuit 14 adjusts magnitude of the driving power P, based on a duty ratio D of a pulse width modulation signal S for controlling magnitude of the driving voltage V. The pulse width modulation signal S is provided from the control-circuit 15. For example, the drive-circuit 14 may be an H-bridge circuit having four switching elements, and may be a drive-circuit having another driving format.

The drive-circuit 14 generates a driving voltage V from a power-supply voltage VB based on a duty ratio D. Theoretically, a driving voltage V may be defined to be a value obtained by multiplying a duty ratio D to the power-supply voltage VB. The power-supply voltage VB may be, for example, a voltage of a power source such as a battery mounted on the vehicle 13.

As a duty ratio D increases, a driving voltage V increases, and a driving power P increases accordingly. Contrarily, as a duty ratio D decreases, a driving voltage V decreases, and a driving power P decreases accordingly.

The control-circuit 15 is an example of a control unit for generating a pulse width modulation signal S to be output to the drive-circuit 14. The control-circuit 15 may be, for example, a microcomputer provided with a central processing unit (CPU), a processor, etc.

The control-circuit 15 starts a process of gradually increasing a driving power P by means of the drive-circuit 14, in a case of meeting a condition (hereinafter also referred to as a "posture-support starting condition") for starting posture-supporting control for the passenger 9. A method for gradually increasing a driving power P is described in the following description.

The control-circuit 15 determines whether or not the posture-support starting condition is met, based on one or more input signals that are input to the control-circuit 15 through a communication line 10. Note that the determination as to the posture-support starting condition may be performed by another determining unit other than the control-circuit 15.

The input signal, which is input through the communication line 10, is provided from one or more devices (e.g., a switch, a sensor, a control device other than the control device 1) mounted on the vehicle 13. For example, the signal line 10 may be a wire harness that conveys a signal indicative of high-level or low-level, a communication line that conveys data in a predetermined communication standard such as a controller area network (CAN), etc.

The input signal that is input through the communication line 10 may be, for example, a buckle signal that is indicative of the tongue 4 being engaged with the buckle 5, a vehicle speed signal that is indicative of a detected value of speed of the vehicle 13, an acceleration signal that is indicative of a detected value of acceleration imposed on the vehicle 13, a steering angular velocity signal that is indicative of a detected value of a steering angular velocity of a steering of the vehicle 13, a brake activating signal that is indicative of activation of a sudden brake or an automatic brake of the vehicle 13, etc.

Note that an acceleration sensor for detecting acceleration imposed on the vehicle 13 may be, for example, a longitudinal acceleration sensor, a lateral acceleration sensor, a yaw rate sensor, etc. A longitudinal acceleration sensor detects acceleration in a longitudinal direction of the vehicle 13. A lateral acceleration sensor detects acceleration in a lateral direction of the vehicle 13. A yaw rate sensor detects a yaw rate of the vehicle 13.

The control-circuit 15 determines that the posture-support starting condition is met, for example, in a case where: the tongue 4 is engaged with the buckle 5; a vehicle speed of a predetermined speed value or more is detected; and acceleration of a predetermined acceleration value or more in an absolute value is detected. The control-circuit 15 may determine that the posture-support starting condition is met, for example, in a case where: the tongue 4 is engaged with the buckle 5; and the brake activating signal that is indicative of activation of a sudden brake or an automatic brake of the vehicle 13 is detected.

Note that criteria for determining whether the posture-support starting condition is met or not is not limited to as the above; the criteria may be alternatively set as appropriate. The control-circuit 15 may determine whether the posture-support starting condition is met or not, based on a combination of an input signal that is input through the communication line 10 and duration of detecting the input signal.

FIG. 2 is a drawing illustrating an example as to how a duty ratio D (or a driving power P to be provided to the motor 7) of a pulse width modulation signal S for controlling a driving voltage V of the motor 7 shifts over time.

The control-circuit 15 starts a process of increasing the duty ratio D at a timing t0 in a case of determining that the posture-support starting condition is met. Then, the control-circuit 15 increases the duty ratio D from an original value x0 at the timing t0 to a first value x1 and then maintains the duty ratio D at the first value x1 until a timing t1, which is after elapse of a time T1 from the timing t0. In this way, the control-circuit 15 can increase the driving power P from an original power value at the timing t0 to a first power value and then maintain the driving power P at the first power value until the timing t1, which is after elapse of the time T1 after the timing t0.

The original value x0 is not a negative value; the original value x0 may be 0 or a positive value slightly greater than 0. The first value x1 indicates a duty ratio required to generate a driving power P that is required to wind up the seatbelt 2. Further, the time T1 is a time required to generate the driving power P that is required to wind up the seatbelt 2. Specifically, the first value x1 indicates a duty ratio required to activate the clutch 17, and the time T1 is a time required to activate the clutch 17.

In other words, the control-circuit 15 can activate the clutch 17 by increasing the duty ratio D from the original value x0 to the first value x1 and then maintaining the duty ratio D at the first value x1 for a period of the time T1. When the clutch 17 is activated, the driving force of the motor 7 can be transferred to the belt-reel 8.

Note that the first value x1 may be either a constant value or a variable value. Further, the time T1 may be a preset fixed period of time and may be a variable period of time which lasts until detecting that the seatbelt 2 has tension of a predetermined value or more.

The control-circuit 15 decreases the duty ratio D from the first value x1 to a second value x2, which is smaller than the first value x1, at the timing t1 after elapse of the time T1. In this way, the control-circuit 15 can decrease the driving power P from the first power value to a second power value, which is smaller than the first power value, at the timing t1.

The timing t1 is a point of time after elapse of the time T1, from which the duty ratio D is decreased from the first value x1. The second value x2 indicates a duty ratio required to generate driving power P that is required to restrain the seatbelt 2 from being pulled out due to shift of the upper body of the passenger 9, i.e., a duty ratio required to maintain the clutch 17 activated.

The control-circuit 15 increases the duty ratio D from the second value x2 at an increase rate (hereinafter referred to as an "increase rate Rd") defining an amount of increase in the duty ratio D per unit time, in order to restrain the seatbelt from being pulled out. In such a way, the control-circuit 15 can increase the driving power P from the second power value at an increase rate (i.e., a power increase rate corresponding to the increase rate Rd) defining an amount of increase in the driving power P per unit time, in order to restrain the seatbelt from being pulled out. The power increase rate corresponding to the increase rate Rd is hereinafter referred to as an increase rate Rp.

Therefore, as the duty ratio D is increased at the increase rate Rd in order to restrain the seatbelt 2 from being pulled out, the seatbelt 2 can be controlled against being pulled out without making the passenger 9 sense a drastic winding of the seatbelt 2, even without using a sensor to detect pull-out of the seatbelt 2. Similarly, as the driving power P is increased at the increase rate Rp in order to restrain the seatbelt 2 from being pulled out, the seatbelt 2 can be controlled against being pulled out without making the passenger 9 sense a drastic winding of the seatbelt 2, even without using a sensor to detect pull-out of the seatbelt 2. The increase rate Rd and the increase rate Rp are predefined before a start of increasing the duty ratio D from the second value x2.

As described above, the control-circuit 15 increases the duty ratio D from the second value x2 at the increase rate Rd, such that the force of pulling out the seatbelt 2 due to shift of the upper body of the passenger 9 is balanced by the force of the motor 7 to restrain the seatbelt 2 from being drawn out (or pulled out). Therefore, the control-circuit 15 increases the driving power P from the second power value at the increase rate Rp, such that the force of pulling out the seatbelt 2 due to shift of the upper body of the passenger 9 is balanced by the force of the motor 7 to restrain the seatbelt 2 from being drawn out (or pulled out).

Therefore, a pull-out amount for the seatbelt 2 increasing with a shift amount of the upper body of the passenger 9 can be balanced with a windup amount for the seatbelt 2 increasing with the driving power P. Consequently, the seatbelt 2 can be controlled against being pulled out due to shift of the upper body of the passenger 9.

The control-circuit 15 stops a process of increasing the duty ratio D at the increase rate Rd, for example, at a timing t2 where the duty ratio D is increased at the increase rate Rd up to a third value x3, which is greater than the second value x2. Therefore, the control-circuit 15 can stop increasing the driving power P at the increase rate Rp at the timing t2 where the driving power P is increased at the increase rate Rp up to a third power value, which is greater than the second power value.

Hence, the magnitude of the force of the motor 7 to control the seatbelt 2 against being drawn out (or pulled out) can be prevented from being excessively high relative to the magnitude of the force of pulling out the seatbelt 2 due to shift of the upper body of the passenger 9.

Note that the increase rate Rd may be a value defined so as to increase from the second value x2 to the third value x3 within a criterion time T2. In this case, the increase rate Rp is a value defined so as to increase from the second power value to the third power value within the criterion time T2. In this way, the seatbelt 2 can be smoothly controlled against being pulled out.

The control-circuit 15 maintains the duty ratio D at the third value x3, for example, after the timing t2 where the duty ratio D is increased up to the third value x3. Therefore, the control-circuit 15 can maintain the driving power P at the third power value after the timing t2 where the driving power P is increased up to the third power value. In this way, even after the timing t2, the magnitude of the force of the motor 7 to control the seatbelt 2 against being drawn out (or pulled out) can be continuously prevented from becoming excessively high relative to the magnitude of the force of pulling out the seatbelt 2 due to shift of the upper body of the passenger 9.

The control-circuit 15 may decrease the duty ratio D from the third value x3 at a predetermined decrease rate after the timing t2 where the duty ratio D is increased up to the third value x3. In this case, the control-circuit 15 can decrease the driving power P from the third power value at a predetermined power decrease rate after the timing t2 where the driving power P is increased up to the third power value. In this way, the force of the motor 7 to restrain the seatbelt 2 from being drawn out (or pulled out) can be weaker after the timing t2.

As illustrated with a dashed line a in FIG. 2, the control-circuit 15 may start decreasing the duty ratio D from the third value x3 at the timing t2. Alternatively, as illustrated with a dashed line b in FIG. 2, the control-circuit 15 may maintain the duty ratio D at the third value x3 for a predetermined period of time after the timing t2 and then start decreasing the duty ratio D from the third value x3 at a timing t5.

As illustrated with a dashed line c in FIG. 2, the control-circuit 15 may maintain the duty ratio D at the third value x3 for a predetermined period of time after the timing t2 and then start increasing the duty ratio D from the third value x3 at a predetermined increase rate at a timing t5. In this case, the control-circuit 15 can increase the driving power P from the third power value at a predetermined power increase rate after the timing t5. In this way, the force of the motor 7 to restrain the seatbelt 2 from being drawn out (or pulled out) can be stronger after the timing t5.

The control-circuit 15 may alternately increase and decrease the duty ratio D at predetermined increase/decrease rates after the timing t2 where the duty ratio D is increased up to the third value x3. In this case, the control-circuit 15 can alternately increase and decrease the driving power P at predetermined power increase/decrease rates after the timing t2 where the driving power P is increased up to the third power value. In this way, the force of the motor 7 to restrain the seatbelt 2 from being drawn out (or pulled out) can be finely adjusted after the timing t2.

For example, as illustrated with a dashed line d in FIG. 2, the control-circuit 15 may start decreasing the duty ratio D from the third value x3 at the timing t2 and then again increase the duty ratio D at a timing t6 where the duty ratio D is decreased down to a value that is equal to or more than the second value x2 and less than the third value x3. After increasing the duty ratio D again at the timing t6, the control-circuit 15 may again decrease the duty ratio D. In the case where the duty ratio D is started to be decreased or increased from the third value x3 at the timing t5, the duty ratio D may be similarly increased or decreased again at the timing t6.

The control-circuit 15 may alternately increase and decrease the duty ratio D within an upper limit of the third value x3. Further, the control-circuit 15 may alternately increase and decrease the duty ratio D such that the duty ratio D crosses the third value x3 and then ends up being at the third value x3.

In a case of setting the third value x3 to be smaller than the first value x1, the third power value becomes smaller than the first power value. In the case of setting the third value x3 as above, the magnitude of the force of the motor 7 to control the seatbelt 2 against being drawn out (or pulled out) can be further prevented from becoming excessively high relative to the magnitude of the force of pulling out the seatbelt 2 due to shift of the upper body of the passenger 9. Note that the third value x3 maybe set to be larger or equal to the first value x1. In this case, the third power value becomes larger or equal to the first power value.

The control-circuit 15 starts a process of increasing the duty ratio D at the increase rate Rd, for example, within a predetermined period of time T3 after decreasing the duty ratio D from the first value x1. Therefore, the control-circuit 15 starts a process of increasing the driving power P at the increase rate Rp, for example, within the predetermined period of time T3 after decreasing the driving power P from the first power value. In this way, control against the seatbelt 2 from being pulled out can be started smoothly.

The timing t3 is a timing where the duty ratio D is decreased down to the second value x2. The predetermined period of time T3 may be duration from the timing t3 to a timing t4 or from the timing t1 to the timing t4. The predetermined period of time T3 may be 0.

In a case where the increase rate Rd is defined to be a constant value, the increase rate Rp becomes a constant value as well. In this case, the force of the motor 7 to restrain the seatbelt 2 from being drawn out (or pulled out) can be increased smoothly. Therefore, the force of the seatbelt 2 being pulled out is smoothly controlled against, such that the passenger 9 senses winding-up of the seatbelt 2 to an even lesser extent.

The increase rate Rd may be defined to be a variable value depending on a power-supply voltage VB for generating a driving voltage V based on the pulse width modulation signal S. In this case, the increase rate Rp becomes a variable value depending on the power-supply voltage VB. In a case where the increase rate Rd is defined to be as above, the increase rate Rd and the increase rate Rp can be maintained at proper values to restrain the seatbelt 2 from being pulled out, even though the power-supply voltage VB fluctuates. For example, the increase rate Rd at a time of a high power-supply voltage VB is set to be a value that is smaller than the increase rate Rd at a time of a low power-supply voltage VB. Similarly, the increase rate Rp at a time of a high power-supply voltage VB is set to be a value that is smaller than the increase rate Rp at a time of a low power-supply voltage VB, for example.

In a case of meeting a condition (hereinafter also referred to as a "posture-support ending condition") for ending posture-supporting control for controlling the seatbelt 2 against being pulled out, the control-circuit 15 drives the motor 7 by means of the drive-circuit 14, such that the clutch 17 is deactivated. When the clutch 17 is deactivated, the driving force of the motor 7 cannot be transferred to the belt-reel 8. For example, a posture-support ending condition is met in a case of not meeting the posture-support starting condition. The posture-support ending condition may be met before or at the timing t2 or after the timing t2. The control-circuit 15 drives the motor 7 to rotate backwards to deactivate the clutch 17, so as to release the seatbelt 2 from control against being pulled out.

Although the above description explains a seatbelt winding apparatus and a seatbelt apparatus along with an embodiment, the present invention is not limited to the above embodiment. Variations and modifications, such as a combination or replacement with a part or entirety of another embodiment, may be made without departing from the scope of the present invention.

For example, the control-circuit 15 may gradually increase the duty ratio D at the increase rate Rd in a linear or curved manner or in a step-by-step manner. Similarly, the control-circuit 15 may gradually increase the driving power P at the increase rate Rp in a linear or curved manner or in a step-by-step manner.

According to the embodiment in which a duty ratio is increased at an increase rate that defines an amount of increase in the duty ratio per unit time in order to restrain a seatbelt from being pulled out, the seatbelt can be controlled against being pulled out even without a sensor to detect pull-out of the seatbelt. Further, according to the embodiment in which an electric power is increased at an increase rate that defines an amount of increase in the electric power per unit time in order to restrain a seatbelt from being pulled out, the seatbelt can be controlled against being pulled out even without a sensor to detect pull-out of the seatbelt.

### [Reference Signs List]

- 1: control device
- 2: seatbelt
- 3: shoulder anchor
- 4: tongue
- 5: buckle
- 6: retractor
- 7: motor
- 8: belt-reel
- 9: passenger
- 10: communication line
- 11: seat
- 12: door
- 13: vehicle
- 14: drive-circuit
- 15: control-circuit
- 16: seatbelt winding apparatus
- 17: clutch

## Claims

1. A seatbelt winding apparatus (16) comprising:
a motor (7); and
a control device (1) configured to decrease electric power provided to the motor (7) from a first power value that is required to wind up a seatbelt (2) at posture-support starting to a second power value that is smaller than the first power value,
**characterized in that**
the control device (1) is configured such that, after decreasing the electric power from the first power value to the second power value, the control device (1) increases the electric power at a power increase rate that defines an amount of increase in the electric power per unit time, in order to restrain the seatbelt (2) from being pulled out .

2. The seatbelt winding apparatus (16) according to claim 1,
wherein the control device (1) decreases a duty ratio of a pulse width modulation signal for controlling a driving voltage of the motor (7) from a first value to a second value, so as to decrease the electric power from the first power value to the second power value, and
wherein, after decreasing the duty ratio from the first value to the second value, the control device (1) increases the duty ratio at an increase rate that defines an amount of increase in the duty ratio per unit time, so as to increase the electric power at the power increase rate, in order to restrain the seatbelt (2) from being pulled out.

3. The seatbelt winding apparatus (16) according to claim 2, wherein the control device (1) stops a process of increasing the duty ratio at the increase rate, upon increasing the duty ratio at the increase rate up to a third value that is greater than the second value.

4. The seatbelt winding apparatus (16) according to claim 3, wherein the control device (1) maintains the duty ratio at the third value, upon increasing the duty ratio up to the third value.

5. The seatbelt winding apparatus (16) according to claim 3, wherein the control device (1) decreases the duty ratio from the third value, upon increasing the duty ratio up to the third value.

6. The seatbelt winding apparatus (16) according to any one of claims 3 through 5, wherein the third value is smaller than the first value.

7. The seatbelt winding apparatus (16) according to any one of claims 2 through 6, wherein, within a predetermined period of time after decreasing the duty ratio from the first value, the control device (1) starts a process of increasing the duty ratio at the increase rate.

8. The seatbelt winding apparatus (16) according to any one of claims 2 through 7, wherein the increase rate is a constant value.

9. The seatbelt winding apparatus (16) according to any one of claims 2 through 7, wherein the increase rate is a variable value depending on a power-supply voltage for generating the driving voltage based on the pulse width modulation signal.

10. A seatbelt apparatus comprising:
the seatbelt winding apparatus (16) according to any one of claims 1 through 9,
the seatbelt (2),
a guide member (3) configured to guide the seatbelt (2);
a tongue (4) to which the seatbelt (2) is attached; and
a buckle (5) to which the tongue (4) is attachable and detachable.

## Patentansprüche

1. Sitzgurtwickelvorrichtung (16) umfassend:
einen Motor (7); und
eine Steuervorrichtung (1), welche ausgestaltet ist, um eine elektrische Leistung, welche dem Motor (7) bereitgestellt wird, von einem ersten Leistungswert, welcher erforderlich ist, um einen Sitzgurt (2) bei einem Haltungsunterstützungsstart aufzuwickeln, auf einen zweiten Leistungswert, welcher kleiner als der erste Leistungswert ist, zu verringern,
**dadurch gekennzeichnet,**
**dass** die Steuervorrichtung (1) ausgestaltet ist, so dass die Steuervorrichtung (1) nach der Verringerung der elektrischen Leistung von dem ersten Leistungswert auf den zweiten Leistungswert die elektrische Leistung mit einer Leistungsanstiegsrate, welche einen Umfang eines Anstiegs der elektrischen Leistung pro Zeiteinheit definiert, erhöht, um den Sitzgurt (2) vor einem Abziehen zurückzuhalten.

2. Sitzgurt wird (16) nach Anspruch 1,
wobei die Steuervorrichtung (1) ein Tastverhältnis eines Pulsweitenmodulationssignals zur Steuerung einer Antriebsspannung des Motors (7) von einem ersten Wert auf einen zweiten Wert verringert, so dass die elektrische Leistung von dem ersten Leistungswert auf den zweiten Leistungswert verringert wird, und
wobei die Steuervorrichtung (1) nach einer Verringerung des Tastverhältnisses von dem ersten Wert auf den zweiten Wert das Tastverhältnis mit einer Anstiegsrate, welche einen Umfang eines Anstiegs des Tastverhältnisses pro Zeiteinheit definiert, erhöht, um die elektrische Leistung mit der Leistungsanstiegsrate zu erhöhen, um den Sitzgurt (2) vor einem Abziehen zurückzuhalten.

3. Sitzgurtwickelvorrichtung (16) nach Anspruch 2, wobei die Steuervorrichtung (1) einen Vorgang einer Erhöhung des Tastverhältnisses mit der Anstiegsrate beim Anstieg des Tastverhältnisses mit der Anstiegsrate bis zu einem dritten Wert, welcher größer als der zweite Wert ist, stoppt.

4. Sitzgurtwickelvorrichtung (16) nach Anspruch 3, wobei die Steuervorrichtung (1) das Tastverhältnis auf dem dritten Wert hält, wenn das Tastverhältnis auf den dritten Wert angestiegen ist.

5. Sitzgurtwickelvorrichtung (16) nach Anspruch 3, wobei die Steuervorrichtung (1) das Tastverhältnis von dem dritten Wert verringert, wenn das Tastverhältnis bis zu dem dritten Wert angestiegen ist.

6. Sitzgurtwickelvorrichtung (16) nach einem der Ansprüche 3 bis 5, wobei der dritte Wert kleiner als der erste Wert ist.

7. Sitzgurtwickelvorrichtung (16) nach einem der Ansprüche 2 bis 6, wobei innerhalb einer vorbestimmten Zeitperiode nach einer Verringerung des Tastverhältnisses von dem ersten Wert die Steuervorrichtung (1) einen Vorgang einer Erhöhung des Tastverhältnisses mit der Anstiegsrate beginnt.

8. Sitzgurtwickelvorrichtung (16) nach einem der Ansprüche 2 bis 7, wobei die Anstiegsrate ein konstanter Wert ist.

9. Sitzgurtwickelvorrichtung (16) nach einem der Ansprüche 2 bis 7, wobei die Anstiegsrate ein variabler Wert abhängig von einer Leistungsversorgungsspannung zum Erzeugen der Antriebsspannung abhängig von dem Pulsweitenmodulationssignal ist.

10. Sitzgurtvorrichtung umfassend:
die Sitzgurtwickelvorrichtung (16) nach einem der Ansprüche 1 bis 9,
den Sitzgurt (2),
ein Führungsteil (3), welches ausgestaltet ist, um den Sitzgurt (2) zu führen;
eine Zunge (4), an welcher der Sitzgurt (2) angebracht ist; und
ein Gurtschloss (5), an welchem die Zunge (4) anbringbar und von welchem sie lösbar ist.

## Revendications

1. Appareil d'enroulement de ceinture de sécurité (16) comprenant :
un moteur (7) ; et
un dispositif de commande (1) configuré pour diminuer la puissance électrique fournie au moteur (7) d'une première valeur de puissance qui est nécessaire pour enrouler une ceinture de sécurité (2) au début de support de posture à une deuxième valeur de puissance qui est inférieure à la première valeur de puissance,
**caractérisé en ce que**
le dispositif de commande (1) est configuré de sorte que, après la diminution de la puissance électrique de la première valeur de puissance à la deuxième valeur de puissance, le dispositif de commande (1) augmente la puissance électrique à un taux d'augmentation de puissance qui définit une quantité d'augmentation de la puissance électrique par unité de temps, afin de limiter le déroulement de la ceinture de sécurité (2).

2. Appareil d'enroulement de ceinture de sécurité (16) selon la revendication 1,
dans lequel le dispositif de commande (1) diminue un rapport cyclique d'un signal de modulation de durée d'impulsion pour commander une tension de commande du moteur (7) d'une première valeur à une deuxième valeur, de manière à diminuer la puissance électrique de la première valeur de puissance à la deuxième valeur de puissance, et
dans lequel, après la diminution du rapport cyclique de la première valeur à la deuxième valeur, le dispositif de commande (1) augmente le rapport cyclique à un taux d'augmentation qui définit une quantité d'augmentation du rapport cyclique par unité de temps, de manière à augmenter la puissance électrique au taux d'augmentation de puissance, afin de limiter le déroulement de la ceinture de sécurité (2).

3. Appareil d'enroulement de ceinture de sécurité (16) selon la revendication 2, dans lequel le dispositif de commande (1) arrête un processus d'augmentation du rapport cyclique au taux d'augmentation, lors de l'augmentation du rapport cyclique au taux d'augmentation jusqu'à une troisième valeur qui est supérieure à la deuxième valeur.

4. Appareil d'enroulement de ceinture de sécurité (16) selon la revendication 3, dans lequel le dispositif de commande (1) maintient le rapport cyclique à la troisième valeur, lors de l'augmentation du rapport cyclique jusqu'à la troisième valeur.

5. Appareil d'enroulement de ceinture de sécurité (16) selon la revendication 3, dans lequel le dispositif de commande (1) diminue le rapport cyclique à partir de la troisième valeur, lors de l'augmentation du rapport cyclique jusqu'à la troisième valeur.

6. Appareil d'enroulement de ceinture de sécurité (16) selon l'une quelconque des revendications 3 à 5, dans lequel la troisième valeur est inférieure à la première valeur.

7. Appareil d'enroulement de ceinture de sécurité (16) selon l'une quelconque des revendications 2 à 6, dans lequel, dans une période de temps prédéterminée après la diminution du rapport cyclique à partir de la première valeur, le dispositif de commande (1) débute un processus d'augmentation du rapport cyclique au taux d'augmentation.

8. Appareil d'enroulement de ceinture de sécurité (16) selon l'une quelconque des revendications 2 à 7, dans lequel le taux d'augmentation est une valeur constante.

9. Appareil d'enroulement de ceinture de sécurité (16) selon l'une quelconque des revendications 2 à 7, dans lequel le taux d'augmentation est une valeur variable qui est fonction d'une tension d'alimentation pour générer la tension de commande sur la base du signal de modulation de durée d'impulsion.

10. Appareil de ceinture de sécurité comprenant :
l'appareil d'enroulement de ceinture de sécurité (16) selon l'une quelconque des revendications 1 à 9,
la ceinture de sécurité (2),
un élément de guidage (3) configuré pour guider la ceinture de sécurité (2) ;
une languette (4) à laquelle la ceinture de sécurité (2) est attachée ; et
une boucle (5) à laquelle la languette (4) peut être attachée et de laquelle la languette peut être détachée.
